# EUROPEAN PATENT SPECIFICATION

(11) **EP 1 465 785 B1**
(45) Date of publication and mention of the grant of the patent: **07.03.2007**
(21) Application number: 03703011.1
(22) Date of filing: 09.01.2003
(51) Int. Cl.: B60J 5/04

(54) **VEHICLE DOOR**
FAHRZEUGTÜR
PORTE DE VEHICULE

(30) Priority: 16.01.2002 JP 2002007990
(43) Date of publication of application: 13.10.2004
(73) Proprietor: HONDA GIKEN KOGYO KABUSHIKI KAISHA, Minato-ku Tokyo 107-8556 (JP)
(72) Inventor: OMORI, Toshihisa, Wako-shi, Saitama 351-0193 (JP); KITAYAMA, Kenichi, Wako-shi, Saitama 351-0193 (JP)
(74) Representative: Prechtel, Jörg
(86) International application number: PCT/JP2003/000123
(87) International publication number: WO 2003/059668

(56) References cited:
- DE-A- 10 064 680
- DE-A- 19 829 244
- US-A- 5 306 066

## Description

### TECHNICAL FIELD

The present invention relates to a technique for improving performance of a door to protect a passenger or driver (hereinafter, generically referred to as a passenger) in a motor vehicle.

### BACKGROUND ART

In recent years, techniques have been developed for protecting a passenger of a vehicle from a collision force acting on the vehicle. For enhanced passenger protecting performance, there has been a demand for reconsideration of the overall vehicle body structure including doors. As an example of a vehicle door designed to enhance the passenger protecting performance, there is known a "vehicle door structure" disclosed in Japanese Patent Laid-open Publication No. HEI-7-25236.

The disclosed vehicle door structure includes an opening portion in an upper area of a door body composed of inner and outer panels, and a window panel is provide in the opening portion for up-and-down movement through the opening.

To secure necessary structural rigidity of the opening portion, reinforcements are provided respectively in an upper portion of the inner panel and upper inner portion of the outer panel and extend along the opening portion. Each of these reinforcements has a recessed portion formed therein to be located forwardly of a hip point of the passenger. When an external force has acted on the door body from sideways of the vehicle, namely, a certain object has collided with a side door of the vehicle, the reinforcements deform plastically, at the position of the recessed portions, toward the interior of a vehicle compartment, so that the collision energy can be absorbed by the plastic deformation of the reinforcements. Thus, a collision impact applied to the passenger can be alleviated, which thereby enhances the passenger protecting performance of the vehicle door.

Recently, efforts have been made to promote weight reduction of motor vehicles in order to achieve an improved fuel consumption rate etc. For that purpose, attempts have also been made to reduce the weight of the vehicle doors, and there is a tendency today to replace the conventional steel material of the vehicle doors with an aluminum alloy material. To further promote the weight reduction of the doors in keeping up with the today's tendency, it may suffice to use an even lighter material; for example, the aluminum alloy may be replaced with a magnesium alloy.

German patent laid-open publication DE 198 29 244 A discloses an example for a vehicle door, whose two main components namely a vehicle door carrier and a module in particular their holding parts are substantially made of magnesium for reducing the weight of the door.

However, a magnesium alloy has an expansitivity in the order of about 6 - 8 %, and its toughness is relatively small. The "toughness" represents how tenacious and how difficult the material is to fracture or break due to an external impact. In cases where a magnesium alloy material is used in a vehicle door, it is generally desired to enhance the passenger protecting performance of the door while reducing the weight of the door, sufficiently taking such characteristics of the magnesium alloy material into consideration.

### DISCLOSURE OF THE INVENTION

According to the present invention, there is provided a vehicle door which includes an inner door panel made of a magnesium alloy and a passenger protecting cover made of a material having greater toughness than the magnesium alloy, the protecting cover being fixed to at least a portion of the inner door panel facing a seat (driver seat or passenger seat) or its vicinity in overlapped relation to that portion.

Because the inner door panel is made of the lightweight magnesium alloy, the present invention can further reduce the weight of the vehicle door and hence the overall weight of the motor vehicle.

The magnesium alloy has relatively small toughness. Even where such a magnesium alloy is used to make the inner door panel, there is a need to secure sufficient passenger protecting performance of the door. Thus, in the present invention, the protecting cover, made of a material having greater toughness than the magnesium alloy, is fixed to at least a portion of the inner door panel facing a passenger seat or its vicinity in overlapped relation to that portion. The inner door panel is easy to deform plastically, while the passenger protecting cover is difficult to deform plastically.

When a collision force acts on the inner door panel from ahead of the vehicle body or in a front-to-rear direction of the vehicle body, the colliding energy can be absorbed by plastic deformation of the inner door panel. Besides, deformation in the portion of the inner door panel, facing the seat or its vicinity, can be suppressed or restrained via the passenger protecting cover having sufficient toughness. As a consequence, deformation in the portion of the inner door panel facing the passenger can be effectively restrained.

Namely, when a collision force acts on the inner door panel in the front-to-rear direction, the present invention can effectively absorb the colliding energy by suppressing deformation of the portion of the inner door panel facing the passenger while allowing the remaining portions of the inner door panel to deform plastically. Therefore, it is possible to lessen a collision impact applied to the passenger and thereby enhance the passenger protecting performance of the vehicle door.

Preferably, the passenger protecting cover is secured locally to the inner door panel by means of rivets, bolts or the like. Namely, the passenger protecting cover relatively hard to deform plastically is secured only locally to the inner door panel that is relatively easy to deform plastically. Thus, plastic deformation of the passenger protecting cover, resulting from plastic deformation of the inner door panel, can be effectively restrained.

According to another aspect of the present invention, the vehicle door is provided with a bracket having both the inner door panel and the passenger protecting cover secured together thereto in overlapped relation to one another in that portion of the inner door panel that faces the seat or vicinity thereof, and a door frame of the inner door panel, the bracket being secured to the door frame.

When a collision force acts on the inner door panel from ahead of the vehicle body or in the front-to-rear direction of the vehicle body, the colliding energy can be absorbed by plastic deformation of the inner door panel. Besides, deformation in the portion of the inner door panel, facing the passenger seat or its vicinity, can be suppressed via the passenger protecting cover having sufficient toughness. As aconsequence, deformation in the portion of the inner door panel facing the passenger can be effectively restrained.

Namely, when a collision force acts on the inner door panel in the front-to-rear direction, the present invention can effectively absorb the colliding energy by suppressing deformation of the portion of the inner door panel facing the passenger while allowing the remaining portions of the inner door panel to deform plastically. Therefore, it is possible to lessen an impact applied to the passenger and thereby even further enhance the passenger protecting performance of the vehicle door.

Moreover, the door frame of the inner door panel has relatively great rigidity. The portion of the inner door panel that faces the seat or vicinity thereof and the passenger protecting cover can be secured to the high-rigidity door frame of the inner door panel via the bracket. Because the portion of the inner door panel that faces the seat or vicinity thereof and the passenger protecting cover are secured together to the bracket in overlapped relation to one another, they can provide a strongly secured assembly. Therefore, the portion of the inner door panel that faces the seat or vicinity thereof and the passenger protecting cover can be secured firmly to the high-rigidity door frame of the inner door panel.

Besides, since the inner door panel, passenger protecting cover and bracket are secured together in the portion of the inner door panel facing the seat or its vicinity, deformation of that portion can be suppressed even more effectively. As a consequence, deformation in the portion of the inner door panel, facing the passenger, can be suppressed with even further reliability.

Namely, when a collision force acts on the inner door panel in the front-to-rear direction, the present invention can effectively absorb the colliding energy by suppressing deformation of the portion of the inner door panel facing the passenger while allowing the remaining portions of the inner door panel to deform plastically. Therefore, it is possible to lessen a collision impact applied to the passenger and thereby even further enhance the passenger protecting performance of the vehicle door.

### BRIEF DESCRIPTION OF THE DRAWINGS

Fig. 1 is a side view of a vehicle door in accordance with an embodiment of the present invention;
Fig. 2 is a side view showing a lower half of the vehicle door of the present invention;
Fig. 3 is a sectional view taken along line 3 - 3 of Fig. 2;
Fig. 4 is a sectional view taken along line 4 - 4 of Fig. 2;
Fig. 5 is a sectional view taken along line 5 - 5 of Fig. 2;
Fig. 6A is a sectional plan view of first and second elongated members having fragile sections, and Fig. 6B is a view showing one of the first and second elongated members having fractured in the fragile section;
Fig. 7 is a sectional view taken along line 7 - 7 of Fig. 2; and
Fig. 8A is a schematic side view of the vehicle door having a door beam, Fig. 8B is a view showing a state of the vehicle door at a moment when a collision force has acted on the door beam, and Fig. 8C is a view showing a state of the vehicle door immediately after the collision force has acted on the door beam and a first dividing element has moved rearward relative to a second dividing element.

### BEST MODE FOR CARRYING OUT THE INVENTION

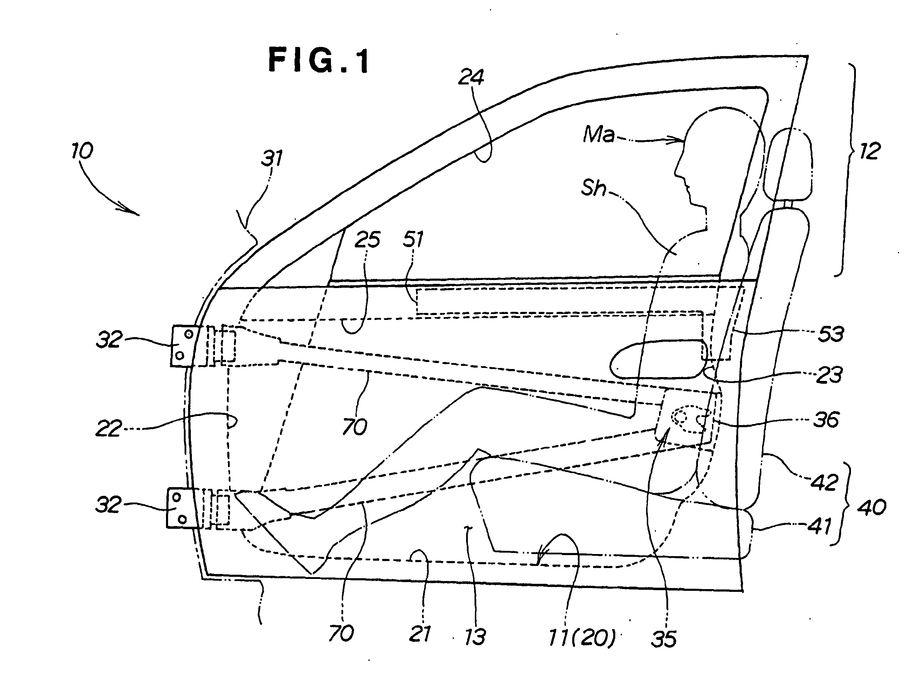

Fig. 1 shows a structure of a left front door 10 of a full-door type vehicle as viewed from a left side of the door 10. The door 10 is composed of an inner door panel 11 having a window sash 12 formed integrally with an upper end portion thereof, and an outer door panel 13 joined with an outer side -i.e., a side facing a viewer of the figure-- of the inner door panel 11. The door 10 is mounted for opening and closing movement with a door frame 20 of the inner door panel 11 attached via upper and lower hinges 32 to a vehicle body 31 denoted by a phantom line in the figure, and it is held in the closed position by means of a door lock section 35 secured to the door frame 20.

The window sash 12 is a component holding therein a door glass (not shown) in such a manner that the glass can be raised and lowered along the sash 12. In this description, the terms "inner door panel" collectively refer to a combination of the panel 11 and window sash 12.

The door frame 20 of the inner door panel 11 includes a horizontal lower frame member 21, a front frame member 22 extending upward from the front end of the lower frame member 21, a rear frame member 23 extending upward from the rear end of the lower frame member 21, and an upper frame member 24 extending between the respective top ends of the front frame member 22 and rear frame member 23.

The inner door panel 11 is formed of a magnesium alloy material with a view to reducing its weight; for example, the inner door panel 11 is made by casting (preferably, die-casting) such a magnesium alloy material. This is because a magnesium alloy material has a low melting point and presents a good fluid flow capability. For example, a magnesium alloy diecasting of Type B (JIS H5303, MD2B) is preferable.

Density of the magnesium alloy is about 1.8 × 10³kg/m³ that is lower than about 2.8 × 10³kg/m³ of an aluminum alloy. Namely, the magnesium alloy is lighter in weight than any other practical materials. Thus using the lightweight magnesium alloy to make the inner door panel 11 can even further reduce the weight of the door 10, and therefore the magnesium alloy is optimal to realize a substantial weight reduction of the motor vehicle.

The outer door panel 13 is made by press-forming a sheet-shaped material, such as a magnesium alloy sheet, aluminum alloy sheet or steel sheet.

Further, in Fig. 1, there is also shown a relationship between the door 10 and a seat 40 for a passenger Ma (i.e., driver's or passenger's seat). The passenger seat 40, denoted by a phantom line in the figure, includes a seat cushion 41 and a seat back 42. The seat cushion 41 is disposed near a rear lower portion of the door frame 20, while the seat back 42 is disposed near a rear portion of the door frame 20.

The door frame 20 includes a first elongated member 25 extending substantially horizontally and facing a side surface of the seat back 42 retained in an upright position. Thus, the first elongated member 25 substantially faces a shoulder Sh of the passenger Ma. The first elongated member 25 is a reinforcing member extending between the top end of the front frame member 22 and a height-wise middle portion of the rear frame member 23.

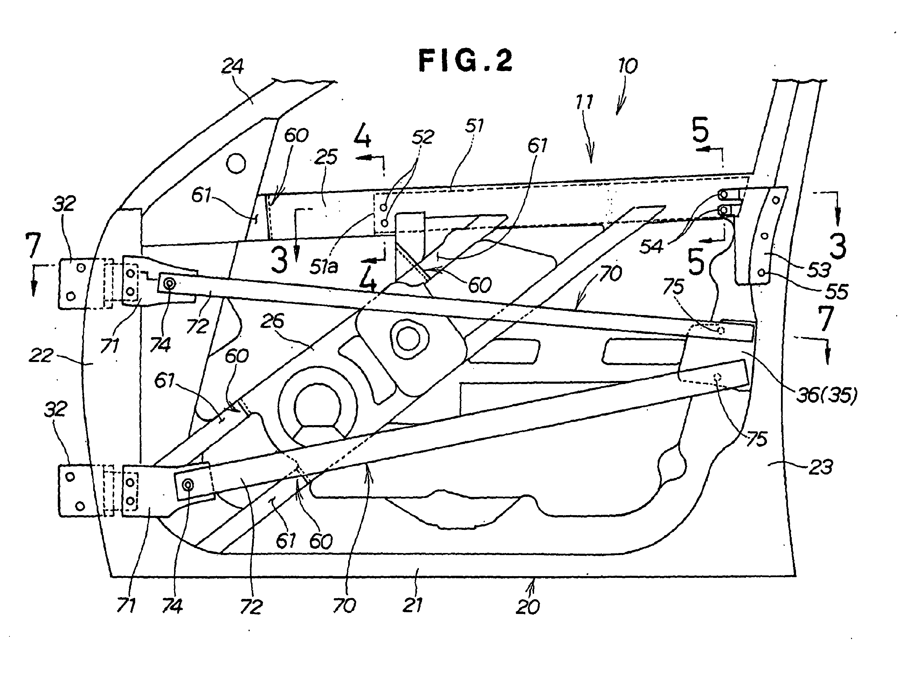

Fig. 2 shows a lower half of the inner door panel 11, which includes the door frame 20 and a plurality of elongated members (the above-mentioned first elongated member 25 and a second elongated member 26) extending in the front-and-rear direction of the vehicle body within the door frame 20. Specifically, the first elongated member 25 and second elongated member 26 are elongated door beams formed integrally with the door frame 20. The second elongated member 26 extends from a front lower portion (i.e., a corner between the lower frame member 21 and the front frame member 22) of the door frame 20 obliquely toward a rear end portion of the first elongated member 25.

The first elongated member 25 has one fragile section 60 at its front end, and the second elongated member 26 has two fragile sections 60 at its front end and one fragile section 60 at its rear end. These fragile sections 60 are located at given distances from the passenger Ma seated on the seat 40 shown in Fig. 1. Details of the fragile sections 60 will be discussed later.

The front frame member 22 has two hinges 32 secured to its upper and lower portions. The rear frame member 23 has the door lock section 35 secured to a height-wise or vertically middle portion thereof that corresponds generally to a midpoint between the upper and lower hinges 32 of the front frame member 22.

The door frame 20 includes a door beam 70 connected between the secured positions of the upper hinge 32 and door lock section 35, and another door beam 70 connected between the secured positions of the lower hinge 32 and door lock section 35.

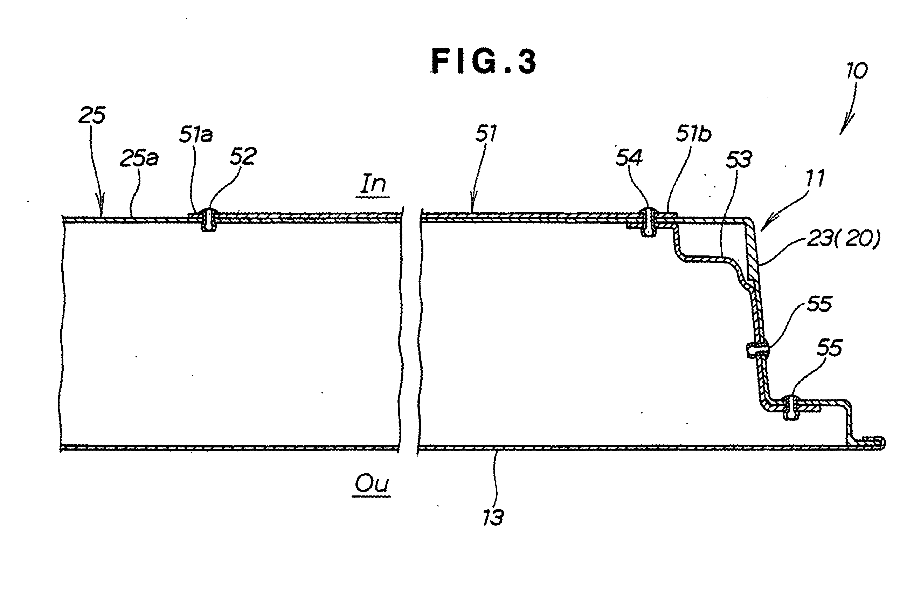

Fig. 3 is a sectional plan view of the rear frame member 23 and first elongated member 25. The first elongated member 25 has an inner wall surface 25a facing the interior of a vehicle compartment In and a passenger protecting cover 51 secured to the surface 25a in overlapped relation thereto. The passenger protecting cover 51 is a press-formed sheet of a relatively lightweight aluminum alloy that has greater toughness than the magnesium alloy used in the inner door panel 11. The "toughness" represents how tenacious and how difficult the material is to fracture or break due to an external impact.

Front end portion 51a of the passenger protecting cover 51 is secured locally to a front portion of the first elongated member 25 of the inner door panel 11 in overlapped relation by means of a plurality of rivets 52. Rear end portion 51b of the passenger protecting cover 51 is secured locally to a bracket 53, along with the first elongated member 25, in overlapped relation to the bracket 53, by means of a plurality of rivets 54. The bracket 53 is secured locally to the rear frame member 23 of the door frame 20 by means of a plurality of rivets 55.

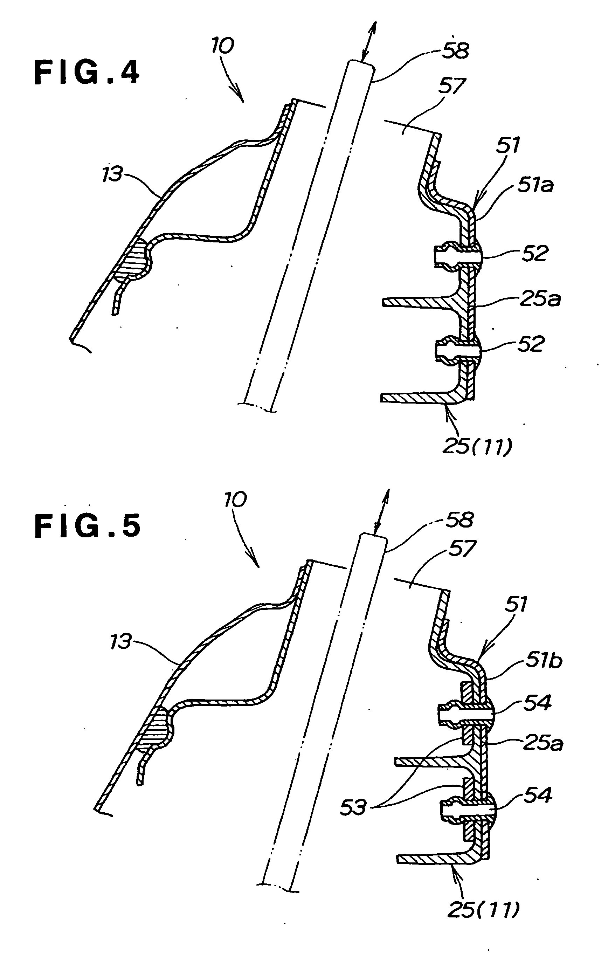

Fig. 4 shows in detail how the front end portion 51a of the passenger protecting cover 51 is secured to the first elongated member 25 in overlapped relation by means of the plurality of rivets 52

Fig. 4 also shows a door glass 58 accommodated in an opening 57 between the first elongated member 25 and the outer door panel 13 for closing/opening vertical movement through the opening 57.

Fig. 5 shows in detail how the rear end portion 51b of the passenger protecting cover 51 is secured to the bracket 53, together with the first elongated member 25, in overlapped relation to the bracket 53, by means of the plurality of rivets 54.

Referring back to Fig. 1, because the first elongated member 25 faces the seat 40, the passenger protecting cover 51 is also positioned in a portion of the inner door panel 11 which faces at least the seat 40 or vicinity thereof. Further, the inner door panel 11 and passenger protecting cover 51 are secured together to the bracket 53 in overlapped relation thereto in the portion facing the seat 40 or vicinity thereof.

The following paragraphs describe the passenger protecting cover 51 with reference to Figs. 1 and 2.

As noted earlier, the magnesium alloy has relatively small toughness. Even where such a magnesium alloy is used to make the inner door panel 11, it is necessary to secure passenger protecting performance of the vehicle door 10. Thus, in the present embodiment, the passenger protecting cover 51, made of a material having greater toughness than the magnesium alloy, is overlappingly secured to at least the portion of the inner door panel 11 facing the seat 40 or vicinity thereof. The inner door panel 11 is easy to deform plastically, while the passenger protecting cover 51 is difficult deform plastically. The reasons for employing such arrangements are as follows.

When a collision force acts on the inner door panel 11 from ahead of the vehicle body or in the front-to-rear direction, the colliding energy can be absorbed by plastic deformation of the inner door panel 11.

If such plastic deformation occurs, the first elongated member 25 of the door frame 20 will also deform plastically. The first elongated member 25 has generally uniform rigidity along its length. But for the passenger protecting cover 51, portions of the first elongated member 25 where deformation occurs due to a collision force are not constant; to secure protection of the passenger Ma, it is preferable that portions of the first elongated member 25 where deformation occur be known or identified clearly in advance.

According to the present embodiment, (elastic and plastic) deformation in the portion of the first elongated member 25, facing the seat 40 or its vicinity, can be suppressed by the passenger protecting cover 51 having sufficient toughness. As a consequence, deformation in the portion of the inner door panel 11 facing the passenger Ma can be effectively restrained.

Namely, when a collision force acts on the inner door panel 11 in the front-to-rear direction, the instant embodiment can effectively absorb the colliding energy by suppressing deformation of the portion of the inner door panel 11 facing the passenger Ma while allowing the remaining portions of the inner door panel 11 to deform plastically. Therefore, it is possible to lessen an impact applied to the passenger Ma and thereby enhance the passenger protecting performance of the vehicle door 10.

Further, the door frame 20 of the inner door panel 11 has relatively great rigidity. The inner member (first elongated member 25) within the door frame 20 of the inner door panel 11 and passenger protecting cover 51 can be secured to the high-rigidity door frame 20 via the bracket 53. Because the inner member of the inner door panel 11 and passenger protecting cover 51 are secured together to the bracket 53 in overlapped relation to one another, they can provide a strongly-secured assembly. Therefore, the inner member and passenger protecting cover 51 of the inner door panel 11 can be secured firmly to the high-rigidity door frame 20.

Besides, since the inner door panel 11, passenger protecting cover 51 and bracket 53 are secured together in the portion facing the seat 40 or its vicinity, deformation of that portion facing the seat 40 or its vicinity can be suppressed even more effectively. As a consequence, deformation in the portion of the inner door panel 11, facing the passenger Ma, can be suppressed with even further reliability. Moreover, because the present embodiment can even further lessen an impact applied to the passenger Ma, it achieves an even further enhanced passenger protecting performance of the vehicle door 10.

Namely, the instant embodiment arranged in the above-described manner can even further enhance the passenger protecting performance of the door 10 while permitting weight reduction of the door 10.

Further, in the present embodiment, the passenger protecting cover 51 is fixed locally to the inner door panel 11 by means of the rivets 52, 54 or otherwise. Namely, the passenger protecting cover 51 relatively hard to deform plastically is secured only locally to the inner door panel 11 relatively easy to deform plastically. Thus, plastic deformation of the passenger protecting cover 51, resulting from plastic deformation of the inner door panel 11, can be effectively restrained.

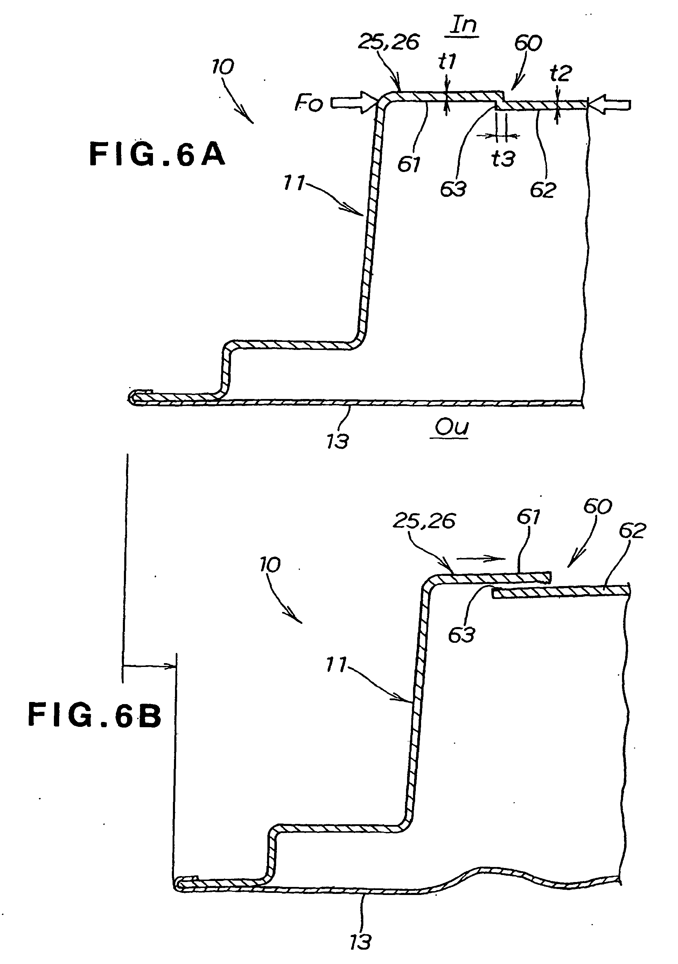

Figs. 6A and 6B show sections of the first and second elongated members 25 and 26, and Fig. 6B particularly shows the fragile section 60 in a fractured state.

The fragile section 60 is a portion that is designed to be fractured by a fracturing stress when a compression force greater than predetermined intensity acts on the first and second elongated members 25 and 26 in a longitudinal direction thereof. The fragile section 60 is formed integrally with the first and second elongated members 25 and 26.

Specifically, each of the fragile sections 60 is a stepped portion formed by a short connecting portion (fracturing portion) 63 extending, in the widthwise direction of the vehicle body, between a pair of first and second elements 61 and 62 extending generally serially in the front-and-rear direction of the vehicle body. The second element 62, as a longitudinally-middle portion of each of the first and second elongated members 25 and 26, is located closer to the outside Ou of the vehicle (farther from the vehicle compartment) than the first element 61. Respective wall thicknesses t1, t2 and t3 of the first element 61, second element 62 and fracturing portion 63 are generally identical to each other.

Behavior of each of the fragile sections 60 will now be described with reference to Figs. 6Aand 6B. The fracturing portion 63 can fracture when a compression force greater than predetermined intensity acts on the first and second elongated members 25, 26 in the longitudinal direction thereof as seen in Fig. 6A,. Namely, when a collision force Fo acts on the inner door panel 11 from ahead of the vehicle body, the fracturing portion 63 fractures due to the collision force Fo. As a consequence, the first element 61 moves rearward relative to the second element 62 as illustrated in Fig. 6B, so that the collision energy from ahead of the vehicle body can be absorbed and lessened by the inner door panel 11 promptly and even more effectively.

In addition, by setting, as appropriate, the locations of the fragile sections 60 on the first and second elongated members 25 and 26, it is possible to clearly identify positions where fracture occurs when a collision force acts on the door 10 from ahead of the vehicle body. Therefore, it suffices to just set appropriate locations of the fragile sections 60 such that the passenger protecting performance can be enhanced.

With such arrangements, the present embodiment can enhance the passenger protecting performance of the vehicle door 10 against a collision force Fo imparted from ahead of the vehicle body.

Further, the door frame 20 has relatively great rigidity. Of the first and second elongated members 25 and 26, the shorter element (first element 61) extending from the high-rigidity door frame 20 to the stepped portion is disposed closer to the interior of the vehicle compartment In. Thus, the shorter element has greater rigidity than the longer element (second element 62). Therefore, in case the stepped portion fractures, it is possible to minimize adverse influences on the interior of the vehicle compartment In.

Moreover, in the instant embodiment where the inner door panel 11 is formed by casting, it is easier to set a shape and size of the stepped portion of the fragile section 60, i.e. shapes and sizes of the pair of elements (first and second elements 61 and 62) extending in the front-and-rear direction of the vehicle body and of the shorter element (fracturing portion 63) extending in the widthwise direction of the vehicle body, and thereby set the fracturing portion with higher accuracy, than in a case where the inner door panel 11 is press-formed.

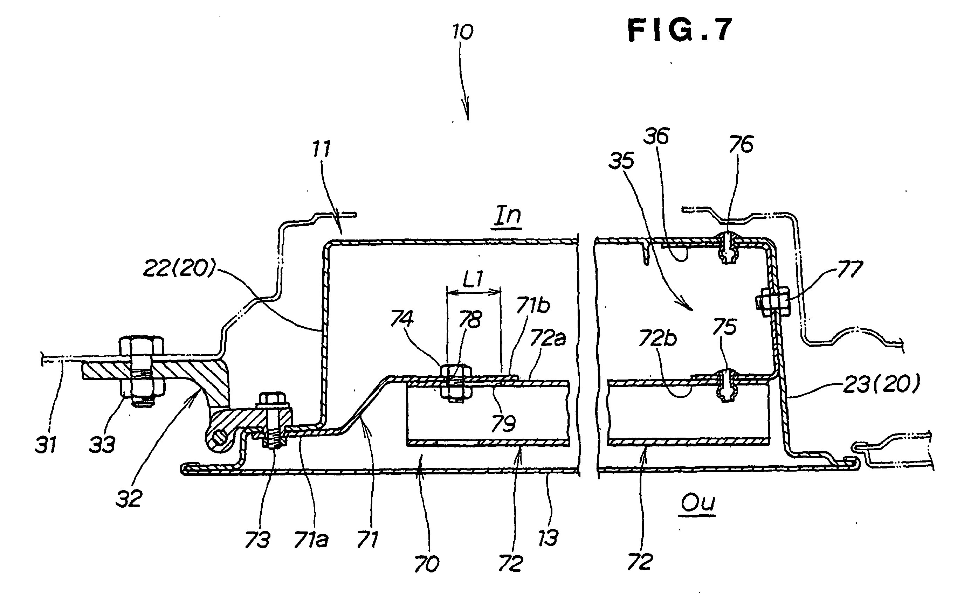

Fig. 7 shows a sectional structure of the door beam 70 referred to earlier in relation to Fig. 2. The door beam 70 in the present embodiment includes a series of dividing members (first and second dividing members 71 and 72), which have their respective end portions 71b and 72a overlapped with each other in the widthwise direction of the vehicle body and joined with each other in such a manner that the dividing members are movable relative to each other by a predetermined distance when a compression force greater than a predetermined intensity acts on the door beam 70.

Specifically, in the illustrated example, the dividing members includes the first dividing member 71 positioned closer to the hinge 32 and second dividing member 72 positioned closer to the door lock section 35, and the mutually-joined areas of the end portions 71b and 72a are located near the hinge 32. The first dividing member 71 is located closer to the interior of the vehicle compartment In than the second dividing member 72.

One element of the hinge 32 is fixed, via a bolt and nut fastener 33, to the vehicle body 31 denoted by a phantom line, while the other element of the hinge 32 is fixed, via a bolt 73, to the front frame member 22 along with a front end portion 71a of the first dividingmember 71. The front end portion 72 a of the second dividing member 72 is overlapped over the rear end portion 71b of the first dividing member 71 in the widthwise direction of the vehicle body and joined, via a bolt 74, with the rear end portion 71b of the first dividing member 71. Further, a rear end portion 72b of the second dividing member 72 and a bracket 36 of the door lock section 35 are overlapped with each other in the widthwise direction of the vehicle body and joined with each other by a rivet 75. The bracket 36 and rear frame member 23 are coupled with each other by a rivet 76 and bolt and nut fastener 77.

The rear end portion 71b of the first dividing member 71 is located closer to the interior of the vehicle compartment In than the front end portion 72a of the second dividing member 72.

The door lock section 35 comprises a conventional mechanism including a latch member (not shown) that is fixed to the bracket 36 and engages a striker (not shown) fixed to the vehicle body 31. The bracket 36 and first and second dividing members 71 and 72 are each a press-formed sheet of an aluminum alloy material.

More specifically, the corresponding end portions 71b and 72a of the first and second dividing members 71 and 72 are joined with each other in either of two manners to be explained in (1) and (2) below.
(1) Round hole 78 is formed in the rear end portion 71b of the first dividing member 71 to extend therethrough in the widthwise direction of the vehicle body, and a hole 79, elongated in the longitudinal direction of the door beam 70, is formed in the front end portion 72a of the second dividing member 72 to extend therethrough in the widthwise direction of the vehicle body. Then, the end portions 71b and 72a are coupled with each other by the bolt 74 extending through the round hole 78 and elongated hole 79.
(2) Hole 79, elongated in the longitudinal direction of the door beam 70, is formed in the rear end portion 71b of the first dividing member 71 to extend therethrough in the widthwise direction of the vehicle body, a round hole 78 is formed in the front end portion 72a of the second dividing member 72 to extend therethrough in the widthwise direction of the vehicle body, and the end portions 71b and 72a are joined together via the bolt 74.

The elongated hole 79 has a length L1, which determines a range over which the first and second dividing elements 71 and 72 are movable relative to each other.

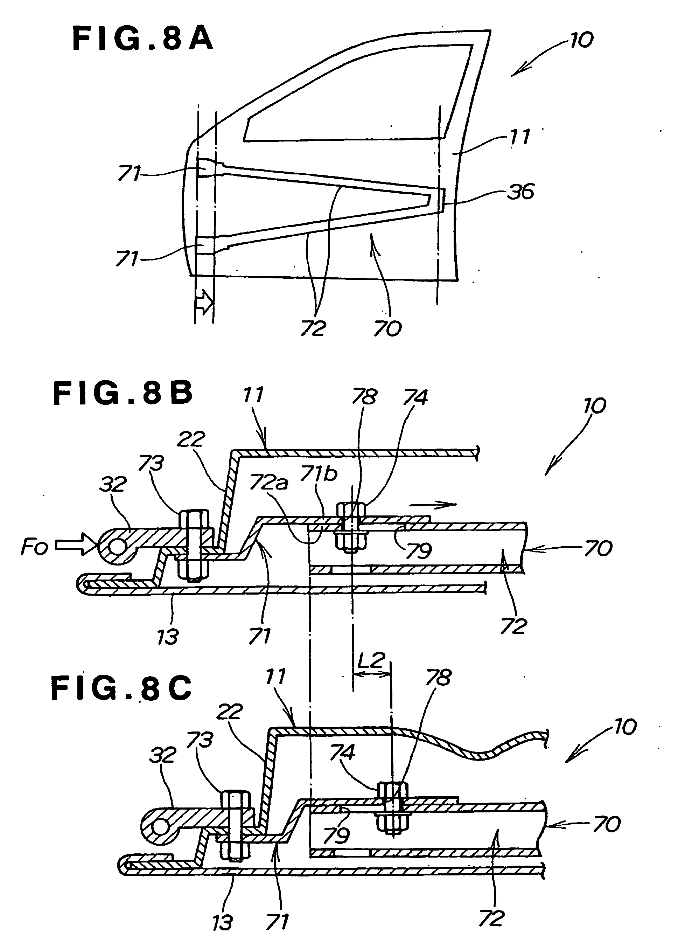

Fig. 8A is a schematic side view of the door 10, Fig. 8B shows a state of the vehicle door when a collision force Fo has acted on the door beam 70, and Fig. 8C shows a state of the vehicle door immediately after the collision force Fo has acted on the door beam 70.

In Figs. 8A and 8B, when a compressing force greater than a predetermined intensity has acted on the door beam 70 in the longitudinal direction thereof, the compressing force exceeds friction occurring between the end portions 71b and 72a through the tightening by the bolt 74. As a consequence, the first and second dividing elements 71 and 72 can move relative to each other.

When the collision force FO acts on the door beam 70 by way of the hinge 32 from ahead of the vehicle body, the collision force Fo is transmitted from the first element 71, via the round hole 78, to the bolt 74. Once the collision force Fo exceeds the friction between the end portions 71b and 72a, the first dividing element 71 moves rearward relative to the second dividing element 72 as illustrated in Fig. 8C. Note that a distance L2 over which the first and second dividing elements 71 and 72 can move relative to each other depends on the length L1 (see Fig. 7) of the elongated hole 79. In the above-described manner, the collision energy can be absorbed.

To sum up the foregoing, the collision force Fo acting on the door 10 from ahead of the vehicle body is transmitted, as a compression force acting on the door beam 70 in the longitudinal direction thereof, from a region at and around the hinge 32 of the door frame 20 (see Fig. 2), via the door beam 70, to a region at and around the door lock section 35 (see Fig. 2). If the collision force Fo acting on the door beam 70 is greater than predetermined intensity, the end portion 71b of the first dividing element 71 moves rearward by the predetermined distance L2 to thereby absorb the collision energy. Therefore, the collision energy applied from ahead of the vehicle body can be alleviated significantly by being absorbed promptly and sufficiently by the door beam 70.

Further, because the collision energy applied from ahead of the vehicle body is absorbed by the door beam 70, an impact force transmitted from the door beam 70 to the door lock section 35 can be greatly reduced. Since the door lock section 35 is subjected to only a small impact force, it can still remain in its predetermined state where the door lock can be released as desired. Therefore, even after the door 10 has undergone the impact force Fo, it is possible to operate the door lock section 35 to reliably release the locking state.

Namely, the present embodiment can enhance the passenger protecting performance of the vehicle door 10 against the collision force Fo applied from ahead of the vehicle body, and, even after the door 10 has undergone the impact force Fo, it can reliably release the locking state of the door lock section 35

Further, the door frame 20 has relatively great rigidity. The mutually-joined dividing areas of the end portions 71b and 72a are located near the hinge 32, namely near the high-rigidity door frame 20. The first dividing element 71 has only a small length from the hinge 32 to the dividing areas, and thus it has greater rigidity than the second dividing element 72. Because the higher-rigidity first dividing element 71 is located closer to the interior of the vehicle compartment In (see Fig. 7), the first dividing element 71 is more difficult to deform plastically toward the interior of the vehicle compartment In. As a consequence, it is possible to suppress plastic deformation of the second dividing element 72 toward the interior of the vehicle compartment In. In this way, the present embodiment can minimize plastic deformation, toward the interior of the vehicle compartment In, of the first and second dividing elements 71 and 72 having undergone a collision force Fo from ahead of the vehicle body. Thus, the present embodiment can lessen an impact applied to the passenger and thereby even further enhance the passenger protecting performance of the door 10.

Further, because the mutually-joined areas of the end portions 71b and 72a are located near the hinge 32 and hence apart from the seat 40 (see Fig. 1) or its vicinity in the forward direction of the vehicle body, the present embodiment can even further lessen the impact applied to the passenger and thereby even more effectively enhance the passenger protecting performance of the door 10.

It should be appreciated that the vehicle door 10 embodying basic principles of the present invention is not limited to the left front door and may be the right front door, left rear door or right rear door.

Further, the vehicle door 10 embodying the present invention is not limited to the full door type; for example, it may be a sash-equipped door having a separate sash body secured to an upper portion of the inner door panel or a sash-less door. Moreover, the inner door panel 11 may be made by press-forming rather than by casting.

Moreover, the passenger protecting cover 51 may be made of any other suitable material than a nonferrous material like an aluminum alloy, such steel, hard rubber or engineering plastics, as long as the material of the protecting cover 51 has greater "toughness" than the inner door panel 11.

In addition, the arrangement for fixing the passenger protecting cover 51 to the inner door panel 11 may be chosen as appropriate taking the material of the cover 51 into consideration; for example, the passenger protecting cover 51 may be fixed to the inner door panel 11 by bolts, spot-welding rather than by rivets.

### INDUSTRIAL APPLICABILITY

In the present invention, a magnesium alloy material, light in weight but relatively small in toughness, is used to make the inner door panel, and the passenger protecting cover 51 is secured to a portion of the inner door panel, facing the seat or its vicinity, in overlapped relation to that portion. With such arrangements, the present invention can significantly reduce the weight of the vehicle door and enhance the passenger protecting performance of the door, and therefore the present invention is extremely useful in applications to the automobile industry.

## Claims

1. A vehicle door (10) comprising:
an inner door panel (11) made of a magnesium alloy,
**characterized by**
a passenger protecting cover (51) made of a material, such as an aluminum alloy, having greater toughness than the magnesium alloy of the inner door panel, said passenger protecting cover (51) being fixed to at least a portion of said inner door panel (11) that faces a seat (40) or vicinity thereof in overlapped relation to said portion.

2. A vehicle door as claimed in claim 1 wherein said passenger protecting cover (51) is secured locally to said inner door panel (11) by a rivet, bolt or the like.

3. A vehicle door (10) as claimed in claim 1 and 2 comprising a bracket (53) having said inner door panel (11) and said passenger protecting cover (51) secured together thereto in overlapped relation to one another in said portion of said inner door panel (11) that faces a seat (40) or vicinity thereof; and
a door frame (20) of said inner door panel (11), said bracket (53) being secured to said door frame (20).

## Patentansprüche

1. Fahrzeugtür (10), umfassend: eine aus einer Magnesiumlegierung hergestellte Innentürplatte (11),
**gekennzeichnet durch**
eine aus einem Material, wie beispielsweise einer Aluminiumlegierung, hergestellte fahrgastschützende Abdeckung (51), welches eine größere Beanspruchbarkeit als die Magnesiumlegierung der Innentürplatte aufweist, wobei die fahrgastschützende Abdeckung (51) an wenigstens einem Abschnitt der Innentürplatte (11), der einem Sitz (40) oder seiner Umgebung gegenüberliegt, in einer überlappenden Beziehung zu dem Abschnitt befestigt ist.

2. Fahrzeugtür nach Anspruch 1, wobei die fahrgastschützende Abdeckung (51) lokal an die Innentürplatte (11) durch ein Niet, einen Bolzen oder dergleichen befestigt ist.

3. Fahrzeugtür (10) nach Anspruch 1 und 2, umfassend eine Halterung (53), welche die Innentürplatte (11) und die fahrgastschützende Abdeckung (51) zusammen an derselben in einer überlappenden Beziehung zueinander in dem Abschnitt der inneren Türplatte (11), der einem Sitz (40) oder seiner Umgebung gegenüberliegt, befestigt aufweist, sowie einen Türrahmen (20) der Innentürplatte (11), wobei die Halterung (53) an dem Türrahmen (20) befestigt ist.

## Revendications

1. Portière de véhicule (10) comprenant :
un panneau intérieur de portière (11) réalisé en un alliage de magnésium,
**caractérisée par**
un capot de protection de passager (51) réalisé en un matériau, tel qu'un alliage d'aluminium, ayant une plus grande résistance que l'alliage de magnésium du panneau intérieur de portière, ledit capot de protection de passager (51) étant fixé au moins à une partie dudit panneau intérieur de portière (11) qui fait face à un siège (40) ou à proximité de celle-ci dans une relation de superposition avec ladite partie.

2. Portière de véhicule selon la revendication 1, dans laquelle ledit capot de protection de passager (51) est fixé localement audit panneau intérieur de portière (11) par un rivet, un boulon ou similaire.

3. Portière de véhicule (10) selon les revendications 1 et 2, comprenant un support (53) auquel ledit panneau intérieur de portière (11) et ledit capot de protection de passager (51) sont fixés ensemble dans une relation de superposition l'un avec l'autre dans ladite partie dudit panneau intérieur de portière (11) qui fait face à un siège (40) ou à proximité de celle-ci ; et
un cadre de portière (20) dudit panneau intérieur de portière (11), ledit support (53) étant fixé audit cadre de portière (20).
